# DEMANDE DE BREVET EUROPEEN

(11) **EP 1 424 151 A1**
(43) Date de publication de la demande: **02.06.2004**
(21) Numéro de dépôt: 02406030.3
(22) Date de dépôt: 27.11.2002
(51) Int. Cl.: B23B 27/04

(54) **Plaquette de coupe**

(71) Demandeur: Applitec Moutier S.A., 2740 Moutier (CH)
(72) Inventeur: Champion François, 2740 Moutier (CH); Schaller, Vincent, 2742 Perrefitte (CH)
(74) Mandataire: Gresset, Jean

(57) **Abrégé**

L'invention concerne une plaquette d'usinage en matériau fritté, présentant un axe longitudinal A-A' et comportant, réparties selon cet axe:
- une zone de coupe (24) à l'une de ses extrémités, munie d'une arête de coupe (30) destinée à assurer un enlèvement de matière, et
- une zone de serrage (32) dans sa portion centrale, destinée à assurer sa fixation sur un outil porte-plaquette.

Ladite plaquette comporte, en outre, une zone intermédiaire (38), comprise entre les zones de coupe (24) et de serrage (32), munie d'une gorge (40) orientée sensiblement selon une direction parallèle à ladite arête (30), pour permettre une rupture de la plaquette en cas de surcharge appliquée à la zone de coupe (24).

## Description

La présente invention se rapporte au domaine des outils de coupe. Elle concerne plus particulièrement une plaquette d'usinage en matériau fritté, par exemple en carbure de titane, présentant un axe longitudinal A-A' et comportant, réparties selon cet axe :
- une zone de coupe à l'une de ses extrémités, destinée à assurer un enlèvement de matière et munie d'une surface d'attaque et d'une surface de dégagement, qui définissent une arête de coupe à leur intersection, et
- une zone de serrage, destinée à assurer sa fixation sur un outil porte-plaquette.

De telles plaquettes permettent de travailler à de très grandes vitesses d'usinage, notamment avec des tours automatiques, pour la fabrication de pièces en grandes séries.

Au cours de cette opération, l'arête de coupe pénètre à l'intérieur de la matière qui est soulevée par la surface d'attaque et forme ainsi un copeau. La plaquette est alors soumise à une pression sensiblement perpendiculaire à sa surface d'attaque. Cette pression peut atteindre des valeurs importantes et se répercuter sur le porte-plaquette.

La plaquette, qui est généralement de forme prismatique, est dimensionnée de manière à ce qu'elle présente une structure la plus rigide possible afin d'éviter toute vibration en cours d'usinage. Dans ces conditions, si l'arête de coupe n'est plus bien affûtée, l'enlèvement de matière ne s'effectue pas de manière normale et la plaquette peut alors être0 brusquement soumise, par sa surface d'attaque, à une force pouvant déformer le porte-plaquette et le rendre inutilisable.

Or, le porte-plaquette est un organe dont les dimensions doivent être très précises pour garantir des conditions d'usinage optimales. Il est donc coûteux. De plus, lorsqu'il est déformé, son remplacement nécessite d'arrêter la machine qui doit être à nouveau réglée, occasionnant ainsi une importante perte de temps.

Le but de la présente invention est de proposer une plaquette assurant des conditions d'usinage optimales, tout en évitant d'abîmer le porte-plaquette. Pour ce faire, la plaquette comporte une zone intermédiaire, comprise entre les zones de coupe et de serrage, munie d'une gorge orientée sensiblement selon une direction perpendiculaire à l'axe A-A', pour permettre une rupture de la plaquette en cas de surcharge appliquée à la zone de coupe.

Avantageusement, la distance entre l'extrémité de la plaquette située du côté de l'arête de coupe et le milieu de la gorge est au moins égale à la hauteur de ladite plaquette.

Il peut être également intéressant que la plaquette présente une structure symétrique, avec une zone de serrage centrale et de part et d'autre de cette zone, deux zones intermédiaires munies chacune d'une gorge et deux zones de coupe formant les deux extrémités de la plaquette.

L'invention concerne également un outil d'usinage comprenant :
- une plaquette d'usinage telle que définie ci-dessus,
- un porte-plaquette comportant un corps muni d'un logement définissant une paroi et destiné à recevoir la zone de serrage de ladite plaquette, et
- un organe de serrage de la plaquette dans son logement.

Pour permettre une mise en place précise de la plaquette sur le porte-plaquette, la paroi du logement est conformée de manière à constituer un bossage destiné à être engagé dans la gorge pour former une butée et ainsi positionner la plaquette sur le porte-plaquette. Par ailleurs, la gorge est définie par au moins une paroi, disposée du côté de l'arête de coupe, orthogonale à l'axe A-A', destinée à prendre appui contre cette butée.

L'une des extrémités du porte-plaquette est destinée à prendre place dans un porte-outil. Son extrémité libre est munie du logement, qui définit une assise. Celle-ci et l'organe de serrage sont chacun dotés d'une rainure parallèle à l'axe A-A', la plaquette étant conformée pour coopérer avec ces rainures.

La rainure disposée sur l'assise s'arrête peu avant l'extrémité du porte-plaquette. Elle est limitée par le bossage formant la butée de positionnement.

Le porte-plaquette présente, à son extrémité munie du logement, une face plane orthogonale à l'axe A-A'. La gorge de la plaquette est dimensionnée de manière à ce que le bossage puisse s'y loger. La paroi de la gorge, située du côté de l'arête de coupe, s'appuie sur l'extrémité du porte-plaquette qui constitue l'une des faces du bossage.

De manière avantageuse, l'organe de serrage comporte une rainure parallèle à l'axe A-A', la plaquette étant conformée pour coopérer avec cette rainure de manière à assurer son positionnement.

L'invention sera mieux comprise à la lecture de la description qui va suivre, faite en regard du dessin annexé, dans lequel :
- la figure 1 est une vue en perspective et en éclaté des éléments constituant un burin de tronçonnage,
- la figure 2 est une vue latérale d'une plaquette de coupe selon l'invention, et
- la figure 3 est une vue en coupe d'un burin de tronçonnage muni d'une plaquette de coupe selon l'invention.

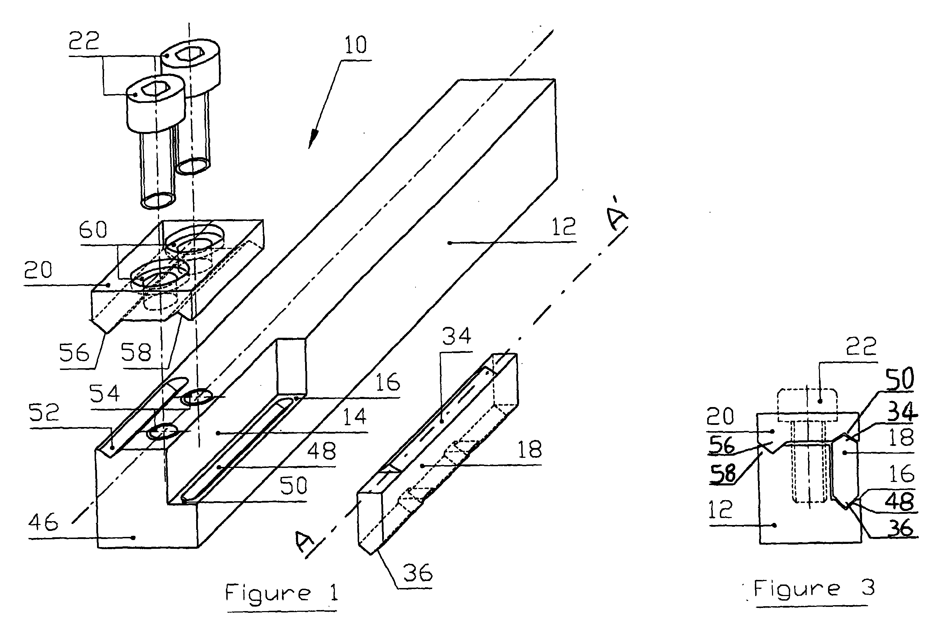

La figure 1 montre un burin de tronçonnage 10 comportant :
- un porte-plaquette 12 et doté d'un logement 14 définissant une assise 16,
- une plaquette de tronçonnage 18 selon l'invention, présentant un axe longitudinal A-A', destinée à être disposée dans le logement 14, coopérant avec l'assise 16 du porte-plaquette pour assurer son positionnement, et
- une plaque de serrage 20 fixée par deux vis 22, coinçant la plaquette 18, entre elle et l'assise 16.

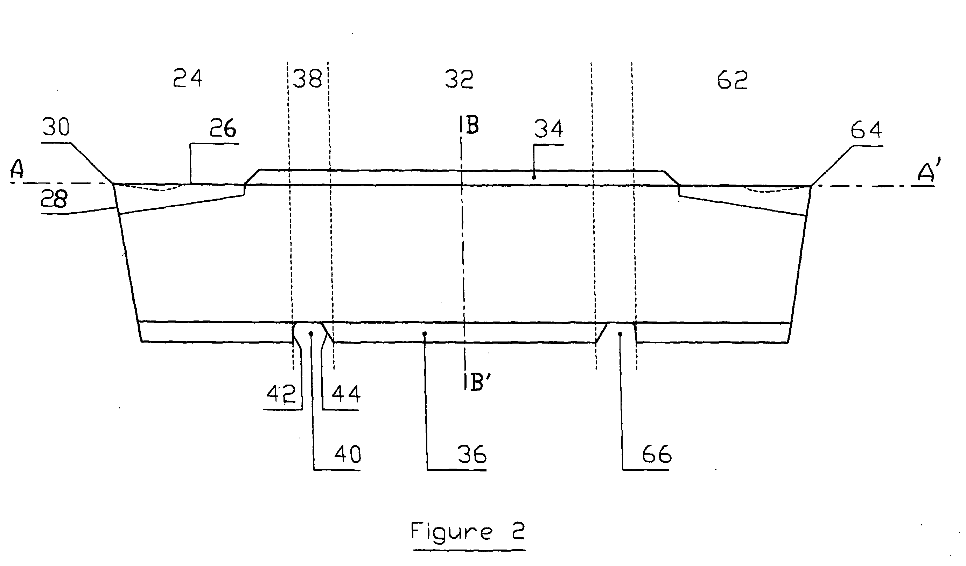

La figure 2 illustre particulièrement la plaquette de tronçonnage 18, en vue latérale, l'axe A-A' étant inscrit dans le plan du dessin. Elle est réalisée dans un matériau fritté, en carbure de titane par exemple, recouvert d'une couche en matériau encore plus dur, généralement du nitrure de titane.

De forme globale prismatique, son extrémité libre comporte une zone de coupe 24, destinée à assurer un enlèvement de matière, et munie d'une surface d'attaque 26 et d'une surface de dégagement 28 qui définissent une arête de coupe 30 à leur intersection. La partie de la plaquette 18 située au contact de la plaque de serrage 20, définit une zone de serrage 32.

La longueur de la plaquette 18 est définie selon l'axe A-A' et sa hauteur est la dimension perpendiculaire à l'arête de coupe 30 et à l'axe A-A'. Dans la longueur de la plaquette, les côtés supérieur 34 et inférieur 36 se terminent en biseau, sauf au niveau de la surface d'attaque 26. Les biseaux s'étendent de la zone de serrage 32 à la zone de coupe 24. On comprendra plus loin comment, au niveau de la zone de serrage 32, ils servent de moyens de positionnement de la plaquette 18 en collaboration avec le porte-plaquette 12 et la plaque de serrage 20.

Selon une caractéristique importante de l'invention, le biseau du côté inférieur 36 est interrompu, au niveau d'une zone intermédiaire 38, située entre les zones de serrage 32 et de coupe 24, par une gorge 40. Celle-ci définit deux parois 42 et 44, la paroi 42 étant disposée du côté de la zone de coupe 24, orthogonalement à l'axe A-A'. La profondeur de la gorge 40 est égale à la hauteur du biseau et la distance entre l'extrémité de la plaquette 18 située du côté de l'arête de coupe 30 et le milieu de la gorge 40 est au moins égale à la hauteur de la plaquette 18.

On va maintenant décrire de manière plus précise les autres constituants du burin de tronçonnage 10 en référence à la figure 1. Le porte-plaquette 12 est un barreau de section rectangulaire, généralement réalisée en acier trempé, ce qui lui confère une certaine souplesse. Il est destiné à être fixé, par l'une de ses extrémités, à une machine-outil non représentée. L'extrémité libre 46 du barreau est parfaitement droite et orthogonale à l'axe A-A'. Le logement 14, de forme globale parallélépipédique, est ménagé sur l'aile du barreau, définissant ainsi l'assise 16, destinée à recevoir la plaquette de coupe 18.

Une première rainure 48, de section globalement triangulaire, est creusée dans l'assise 16, parallèlement à l'axe A-A'. Cette rainure 48 s'arrête peu avant l'extrémité 46 du barreau et est limitée par un bossage 50, de taille adaptée pour qu'il puisse se loger dans la gorge 40 de la plaquette 18. L'une des faces du bossage 50 est constituée par l'extrémité 46 du barreau qui forme ainsi une butée de positionnement. De plus, la rainure 48 est conformée de manière à coopérer avec le profil du biseau du côté inférieur 36 de la plaquette 18 pour participer au positionnement de celle-ci.

Sur la face supérieure du porte-plaquette 12 est creusée une deuxième rainure 52 parallèle à la rainure 48 et de même forme, pour des facilités de fabrication. Cependant, la rainure 52 débouche au niveau de l'extrémité libre 46 du barreau. A côté de la rainure 52 et également alignés selon l'axe A-A', deux taraudages 54 ont été ménagés verticalement dans l'épaisseur du barreau et sont destinés à recevoir les vis 22.

La plaque de serrage 20 est, elle aussi, en acier. De forme globale parallélépipédique, de même largeur que le porte-plaquette 12, de longueur légèrement inférieure à celle de la rainure 52, elle se superpose à l'extrémité du porte-plaquette 12 et recouvre le logement 14.

Sa face inférieure, au contact de la face supérieure du porte-plaquette 12, possède une arête 56 disposée et conformée pour coopérer avec la rainure 52

Cette face est également dotée d'une rainure 58 qui, lorsque la plaque de serrage 20 est en place, se trouve à la verticale de la rainure 48, surplombant le logement 14. Elle est également conformée de manière à coopérer avec le profil du biseau du côté supérieur 34 de la plaquette 18 pour participer au positionnement de celle-ci.

Entre l'arête 56 et la rainure 58, la plaque 20 est traversée par deux orifices 60 positionnés de manière à ce que, lorsque l'arête 56 coopère avec la rainure 52, ils soient superposés aux taraudages 54, laissant libre le passage des vis 22. Sur la face supérieure de la plaque 20, les orifices 60 s'élargissent pour y loger les têtes de vis.

La figure 3 montre, en coupe, l'outil de coupe lorsque toutes les pièces sont assemblées. Ainsi, la plaquette de tronçonnage 18 est positionnée verticalement et latéralement dans le logement 14 grâce :
- aux biseaux des faces 34 et 36, respectivement logés dans les rainures 58 et 48;
- à la coopération de l'arête 56 et de la rainure 52, assurant également le positionnement de la plaque de serrage 20 et, plus particulièrement, l'alignement des orifices 60 et des taraudages 54;
- aux vis 22 qui coopèrent avec les taraudages 54 pour maintenir fermement le tout.

Le positionnement longitudinal est assuré par la gorge 40 qui enjambe le bossage 50, la paroi 42 de la gorge s'appuyant sur l'extrémité du porte-plaquette 12 pour assurer un positionnement longitudinal de la plaquette 18 particulièrement précis;

La combinaison de ces différents moyens de positionnement garantit une mise en place simple et précise de la plaquette de tronçonnage 18. La coopération des arêtes et des rainures procure, de plus, une grande rigidité à l'outil.

Enfin, outre un repère efficace pour assurer son positionnement, la gorge 40 crée un point faible dans la plaquette de tronçonnage 18. La résistance mécanique de la plaquette 18 est ainsi inférieure à la résistance mécanique du porte-plaquette 12. Lorsqu'une contrainte anormalement élevée s'exerce sur l'ensemble de l'outil, c'est donc la plaquette 18 qui se brise et non plus le porte-plaquette 12 qui se déforme.

Comme illustré sur la figure 2, il peut être particulièrement intéressant de doter la plaquette de tronçonnage 18 d'une deuxième zone de coupe 62 placée à son autre extrémité et d'une deuxième gorge 66 disposée symétriquement à la première gorge 40 par rapport à un axe vertical B-B' passant par le milieu de la plaquette 18. Ainsi, lorsque la première arête 32 est émoussée, alors que la plaquette 18 ne s'est pas brisée, il suffit de faire pivoter la plaquette de 180° autour de l'axe B-B' pour utiliser une deuxième arête de coupe 64, son positionnement longitudinal étant assuré par la deuxième gorge 66 qui fournit également un point faible permettant d'épargner le porte-plaquette 12 lorsqu'une contrainte trop importante s'exerce sur l'outil.

## Revendications

1. Plaquette d'usinage (18) en matériau fritté, présentant un axe longitudinal A-A' et comportant, réparties selon cet axe:
- une zone de coupe (24) à l'une de ses extrémités, munie d'une arête de coupe (30) destinée à assurer un enlèvement de matière, et
- une zone de serrage (32) dans sa portion centrale, destinée à assurer sa fixation sur un outil porte-plaquette (12),
**caractérisée en ce qu'**elle comporte, en outre, une zone intermédiaire (38), comprise entre les zones de coupe (24) et de serrage (32), munie d'une gorge (40) orientée sensiblement selon une direction perpendiculaire audit axe A-A', pour permettre une rupture de la plaquette (18) en cas de surcharge appliquée à la zone de coupe (24).

2. Plaquette selon la revendication 1, **caractérisée en ce que** la distance entre l'extrémité de la plaquette (18) située du côté de l'arête de coupe (30) et le milieu de la gorge (40) est au moins égale à la hauteur de ladite plaquette (18).

3. Plaquette selon l'une des revendications 1 et 2, **caractérisée en ce qu'**elle présente une structure symétrique, avec une zone de serrage (32) centrale et de part et d'autre de cette zone, deux zones intermédiaires munies chacune d'une gorge (40, 66) et deux zones de coupe (24, 62) formant les deux extrémités de ladite plaquette (18).

4. Outil d'usinage comprenant :
- une plaquette d'usinage (18) selon l'une des revendications 1 à 3,
- un porte-plaquette (12) comportant un corps muni d'un logement (14) définissant une paroi et destiné à recevoir la zone de serrage (32) de ladite plaquette, et
- un organe de serrage (20) de la plaquette dans son logement,
**caractérisé en ce que** la paroi du dit logement (14) est conformée de manière à constituer un bossage (50) destiné à être engagé dans ladite gorge (40) pour former une butée de positionnement de la plaquette (18) sur le porte-plaquette (12).

5. Outil selon la revendication 4, **caractérisé en ce que** ladite gorge (40) est définie par au moins une paroi (42), disposée du côté de l'arête de coupe (30), orthogonale à l'axe A-A', destinée à prendre appui contre ladite butée.

6. Outil selon l'une des revendications 4 et 5 **caractérisé en ce que** la paroi dudit logement (14)définit une assise (16) dotée d'une rainure (48) parallèle à l'axe A-A' et **en ce que** ladite plaquette (18) est conformée pour coopérer avec ladite rainure (48).

7. Outil selon la revendication 6 **caractérisé en ce que** ladite rainure (48) est limitée, à l'une de ses extrémités, par ledit bossage (50).

8. Outil selon la revendication 7, **caractérisé en ce que** ledit porte-plaquette (12) présente, à son extrémité munie du logement (14), une face (46) plane et orthogonale à l'axe A-A' et **en ce que** la gorge (40) est dimensionnée de manière à ce que le bossage (50) puisse s'y loger, la paroi (42) s'appuyant sur l'extrémité (46) du porte-plaquette (12) qui constitue l'une des faces du bossage (50).

9. Outil selon l'une des revendications 3 à 8, **caractérisé en ce que** l'organe de serrage comporte une rainure (58) parallèle à l'axe A-A' et **en ce que** ladite plaquette (18) est conformée pour coopérer avec ladite rainure (58).
